# EUROPEAN PATENT SPECIFICATION

(11) **EP 3 080 019 B1**
(45) Date of publication and mention of the grant of the patent: **02.01.2019**
(21) Application number: 14802200.7
(22) Date of filing: 07.11.2014
(51) Int. Cl.: B65G 29/00, B65G 49/08, B65G 57/04

(54) **TILE SORTING AND STACKING SYSTEM**
FLIESENSORTIER- UND STAPELSYSTEM
SYSTÈME DE TRI ET D'EMPILEMENT DE CARREAUX

(30) Priority: 10.12.2013 IT BO20130682
(43) Date of publication of application: 19.10.2016
(73) Proprietor: Nuova Sima S.p.A., 40026 Imola (BO) (IT)
(72) Inventor: BARDI, Maurizio, I-41043 Formigine (Modena) (IT)
(74) Representative: Dall'Olio, Christian
(86) International application number: PCT/IB2014/065867
(87) International publication number: WO 2015/087177

(56) References cited:
- DE-A1- 3 242 167
- IT-B- 1 157 843
- JP-U- S63 169 533

## Description

### FIELD OF THE INVENTION

The present invention relates to the technical sector concerning the sorting and stacking of tiles.

### DESCRIPTION OF THE PRIOR ART

Italian patent IT 1157843 describes a sorting and stacking system of tiles according to the preamble of claim 1, comprising: an input line supplying tiles to be sorted and arranged in a row; a sorting carousel which rotates with respect to a carousel axis, which comprises a plurality of gripping means and which comprises a plurality of carousel arms which develop radially from the carousel axis and which bear the plurality of gripping means, the sorting carousel being arranged such as to receive the tiles from the input line; a plurality of seatings arranged below the sorting carousel along a section of a circumference which is coaxial to the carousel axis, which seatings are conformed such as to restingly receive the tiles released by the sorting carousel and to form stacks of tiles; an output line which receives the stacks of tiles accumulated in the seatings, which output line forms an annular rail which is external of the seatings; and transfer means for transferring a stack of tiles, arranged on a seating, on the annular rail.

This prior art system can be used to form stacks of tiles having homogeneous qualitative characteristics, so that by using a data code printed on the packages it is possible to differentiate first-grade tiles from second-grade tiles, for example. The above-described prior-art system is used to manipulate small-format tiles, usually up to 200 mm per side: for larger formats, however, the seatings should be of larger dimensions and therefore so should the sorting carousel, the annular rail and the transfer means, which would lead to an excessive increase in costs and overall size of the system.

### SUMMARY OF THE INVENTION

The aim of the present invention consists in obviating the above-cited drawbacks. The above aim is attained by means of a sorting and stacking system of tiles according to claim 1.

The ability of the gripping means to move vertically makes it possible to form a region of space superiorly delimited by the sorting carousel and lateral delimited by the seatings, the input line and the output line. The transfer arm, the loading means and the unloading means form transfer means for transferring a stack of tiles, arranged on a seating, onto the output line. To contain the radial dimension of the system, the transfer means have been advantageously arranged internally of this region of space, which has made the system more compact. Further, the system of the invention can be designed so as to manipulate large formats with a reasonable increase of the overall size: in fact, an increase in the radial dimensions of the seatings to accommodate large formats does not correspond to a greater dimensioning of the output line, as was the case with the prior art.

### BRIEF DESCRIPTION OF THE DRAWINGS

Specific embodiments of the invention will be described in the following part of the present description, in accordance with what is set out in the claims and with the aid of the accompanying tables of drawings, in which:
- figure 1 is a schematic view from above of a tile sorting and stacking system of the present invention;
- figures 2-6 are five views from above of the same system as in figure 1 in which different tile formats are used;
- figures 6A, 6B are partial views from above which illustrate the possibility, in accordance with an embodiment of the system, of regulating a relative position of adjacent carousel arms so as to enable a secure and stable grasp of a large-format tile;
- figure 7 illustrates a schematic lateral view of the system of figure 1, according to a first embodiment;
- figure 7A illustrates a variant of a detail of figure 7;
- figure 8 is a view from above of the system of figure 7, wherein the sorting carousel has been removed and which schematically represents a first operating step and a second operating step;
- figure 9 is a view of section A-A of figure 8 in which the sorting carousel has been illustrated;
- figure 10 is a view from above of the system of figure 7, in which the sorting carousel has been removed and in which a fourth operating step has been schematically illustrated;
- figure 11 illustrates a lateral view of the system of figure 7 during the fourth operating step;
- figures 12, 13 are both a larger-scale view of detail K1 of figure 9 and respectively illustrate the first operating step and the second operating step, also shown in figure 9;
- figure 14 is a larger-scale view of detail K2 of figure 11, and illustrates a third operating step which is not illustrated in figure 11;
- figure 15 is a larger-scale view of detail K2 of figure 11, and illustrates a fourth operating step which is not illustrated in figure 11;
- figure 16 is a view from above of the system of figure 1 according to a second embodiment, in which the sorting carousel has been removed and in which a first operating step and a second operating step have been schematically illustrated;
- figure 17 is the view of section B-B of figure 16, in which the sorting carousel is illustrated;
- figure 18 illustrates a view from above of the system of figure 16, wherein the sorting carousel has been removed and in which a third operating step is schematically illustrated;
- figure 19 illustrates a lateral view of the system of figure 16 during the third operating step;
- figures 20, 21 are both a larger-scale view of detail K3 of figure 17 and illustrate respectively the first operating step and the second operating step shown also in figure 17;
- figure 22 is a larger-scale view of detail K4 of figure 19 which illustrates the third operating step illustrated also in figure 19;
- figure 23 illustrates a view from above of the system of figure 1 in accordance with a third embodiment, in which the sorting carousel has been removed and in which a first operating step has been schematically illustrated;
- figure 24 is the view of section C-C of figure 23, in which the sorting carousel has been represented;
- figure 25 is a larger-scale view of detail K5 of figure 24, and illustrates the first operating step shown also in figure 24;
- figure 26 is a larger-scale view of detail K5 of figure 24 and illustrates a second operating step and a third operating step which are not illustrated in figure 24;
- figure 27 is a larger-scale view of detail K5 of figure 24 and illustrates a fourth operating step which is not illustrated in figure 24.

### DESCRIPTION OF PREFERRED EMBODIMENTS

With reference to the accompanying tables of drawings, (1) denotes in its entirety a tile (3) sorting and stacking system, object of the present invention, comprising: an input line (2) supplying tiles (3) to be sorted and arranged in a row; a sorting carousel (4) which rotates with respect to a carousel (A) axis, which comprises a plurality of gripping means (5) and which comprises a plurality of carousel arms (6) which develop radially from the carousel axis (A) and which bear the plurality of gripping means (5), the sorting carousel (4) being arranged such as to receive the tiles (3) from the input line (2); a plurality of seatings (7) arranged below the sorting carousel (4) along a section of a circumference which is coaxial to the carousel axis (A), which seatings (7) are conformed such as to restingly receive the tiles (3) released by the sorting carousel (4) and to form stacks of tiles (8); an output line (9) which receives the stacks of tiles (8) accumulated in the seatings (7). The gripping means (5) are vertically mobile so as to collect a tile (3) from the input line (2) and to release the tile onto a seating (7). The input line (2) is arranged radially or tangentially with respect to the section of circumference along which the seatings (7) are arranged. The output line (9) is arranged radially or tangentially with respect to the section of circumference along which the seatings (7) are arranged.

The system (1) further comprises: a transfer arm (11) that rotates with respect to a rotation axis substantially coinciding with the carousel axis (A), which transfer arm (11) is positionable angularly between a loading position, in which it is aligned radially to a seating (7) bearing a stack of tiles (8) to be loaded, and an unloading position in which it is arranged in proximity of the output line (9); loading means (10) for loading a stack of tiles (8) from a seating (7) on-board the transfer arm (11) when the transfer arm (11) is arranged in the loading position; unloading means (12) for unloading a stack of tiles (8) from the transfer arm (11) onto the output line (9) when the transfer arm (11) is arranged in the unloading position. The transfer arm (11), the loading means (10) and the unloading means (12) are arranged and operating in a region of space (13) delimited superiorly by the carousel arms (6) and which region of space (13) is laterally delimited by the seatings (7), the input line (2) and the output line (9).

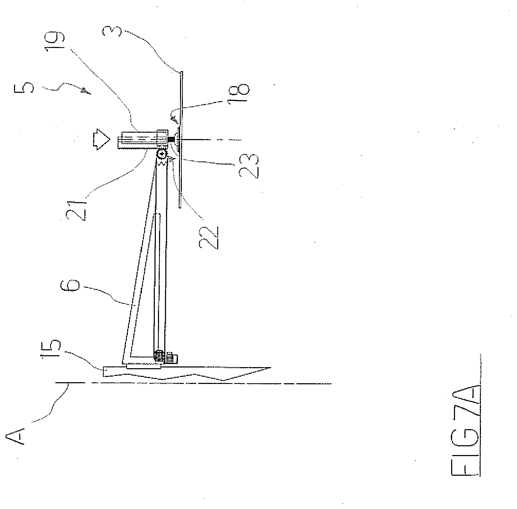

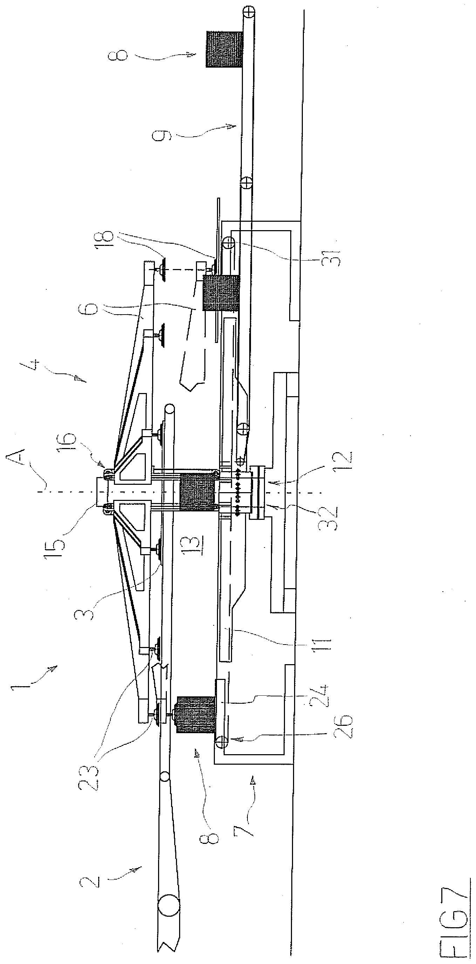

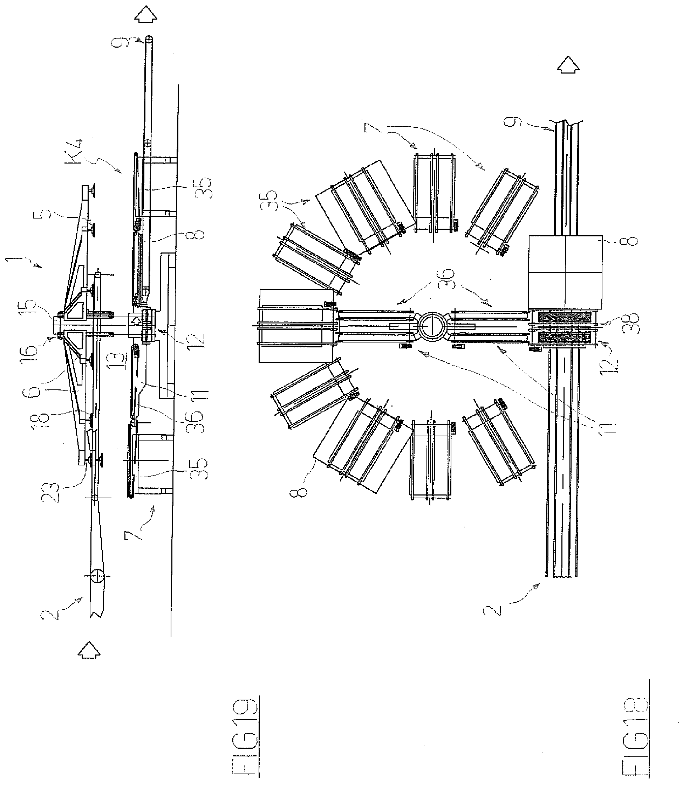

The input line (2) is preferably arranged tangentially with respect to the sorting carousel (4) (figures 7, 9, 11, 17, 19, 24).

The output line (9) is preferably arranged below the sorting line (4) (figures 7, 9, 11, 17, 19, 24).

The inlet line (2) is preferably arranged tangentially with respect to the sorting carousel (4): in this way the advancing velocity of the tiles (3) moving along the input line (2) can be increased, as the sorting carousel (4), for the purpose of gripping each tile (3), carries out a following step.

In a case in which the input line (2) is tangential to the sorting carousel (4), the output line (9) is preferably further arranged tangentially to the sorting carousel (4), parallel to the input line (2) and at a lower height with respect to the input line (2) (figures 7, 9, 11, 17, 19, 24). In this way, given an equal size of the system (1), the number of seatings (7) is maximized as is the velocity of the tiles (3) which travel on the input line (2) and the velocity of the stacks of tiles (8) which travel on the output line (9).

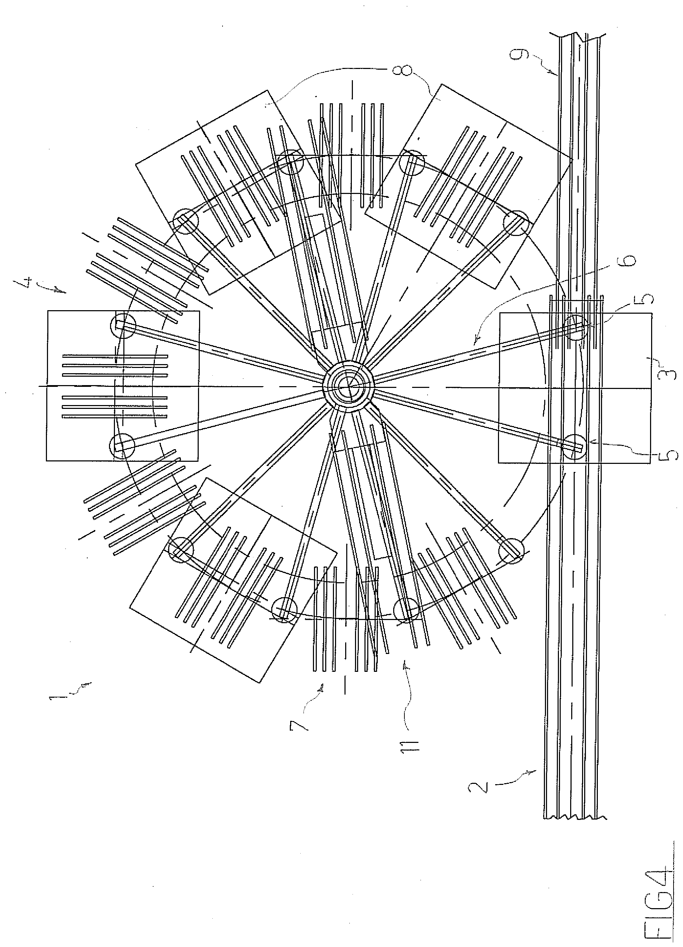

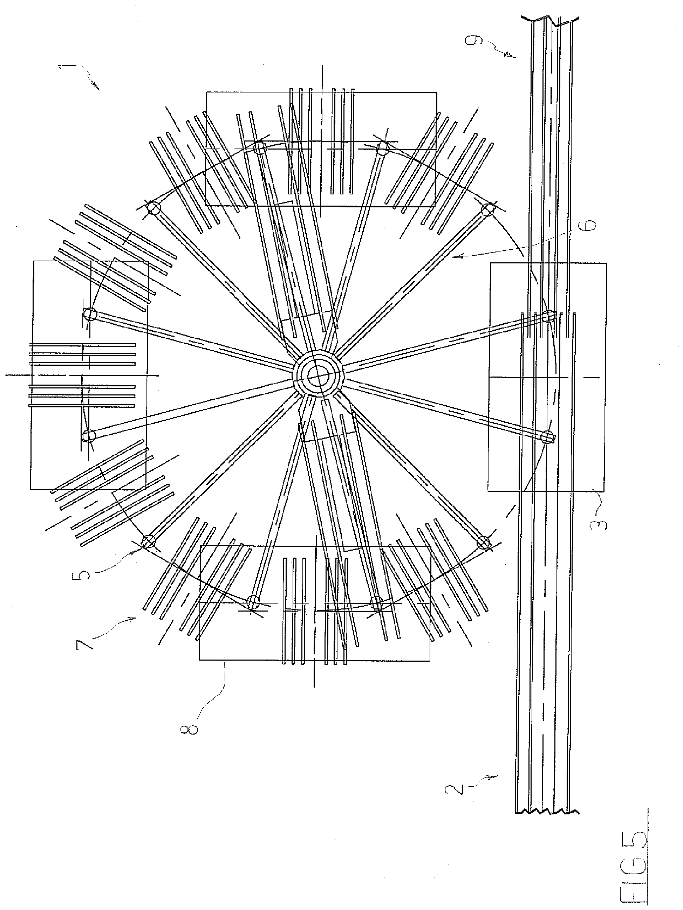

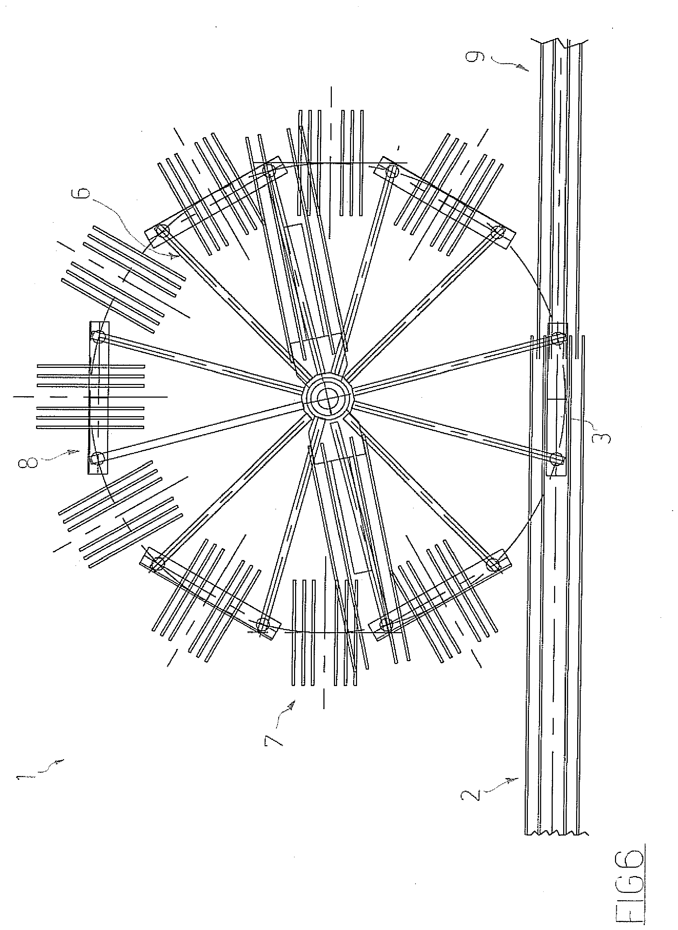

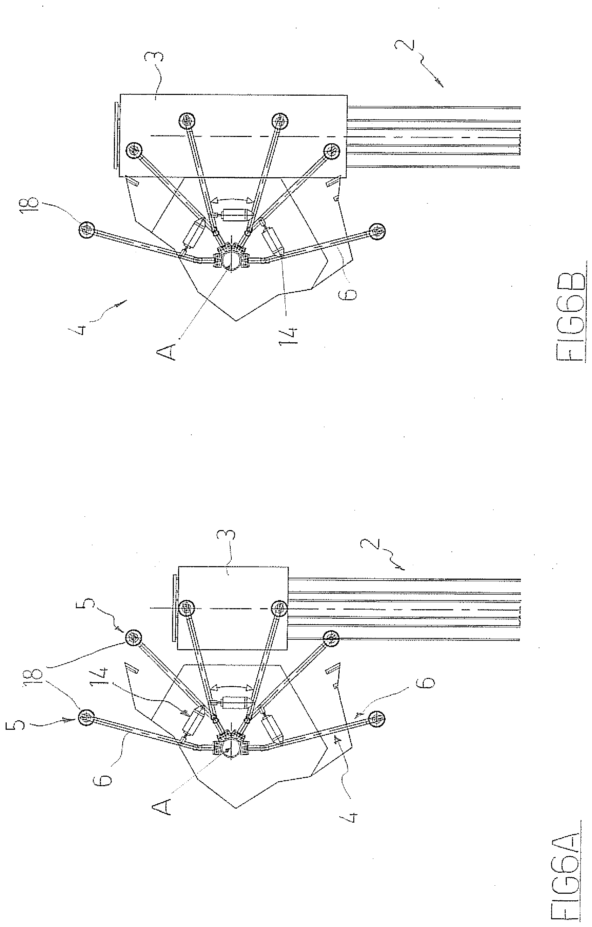

Two or more adjacent carousel arms (6) are preferably angularly adjustable nearingly or distancingly to one another in order to enable a gripping of a tile (3) from the input line (2) contemporaneously by more than one gripping means (5) borne by reciprocally-adjacent carousel arms (6): figures 6A, 6B illustrate the possibility of regulating the relative distance between adjacent carousel arms (6) by means of the use of linear actuators that are part of the system (1), for example pneumatic cylinders (14), each interposed between two adjacent carousel arms (6); the angular regulating of the carousel arms (6) advantageously enables manipulating even large-format tiles (3) (see the measurements of the tiles (3) described in the following by way of example) with a stable and secure grip by a plurality of gripping means (5) (gripping means (5) borne by two adjacent carousel arms (6) in the example of figure 6A and gripping means (5) borne by four adjacent carousel arms (6) in the example of figure 6B). in addition, the seatings (7) are distanced and dimensioned such that a plurality of adjacent seatings (7) can contemporaneously support a stack of tiles (8) having dimensions such as to project from a seating (7), thus increasing the stability of the stack of tiles (8) which can thus have a larger rest surface: in this respect, observe the examples of figures 4 and 5 in particular. The seatings (7) can be neared to one another up to forming an annular arrangement on which the piles of tiles (8) can be released without any need for centring a stack of tiles (8) on a seating (7); in this case it will be necessary only to distance the stacks of tiles (8) by a predetermined angular step.

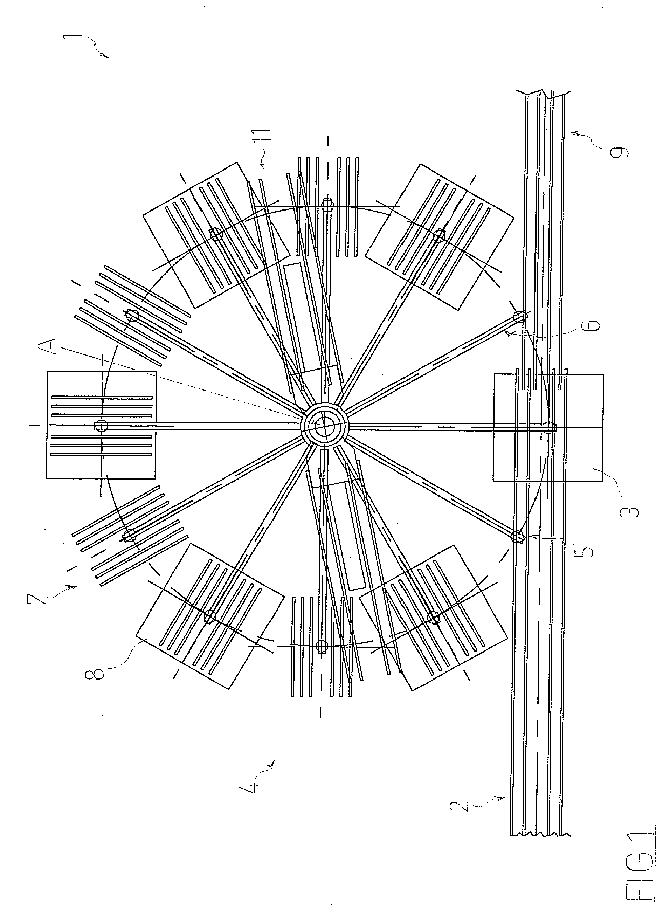

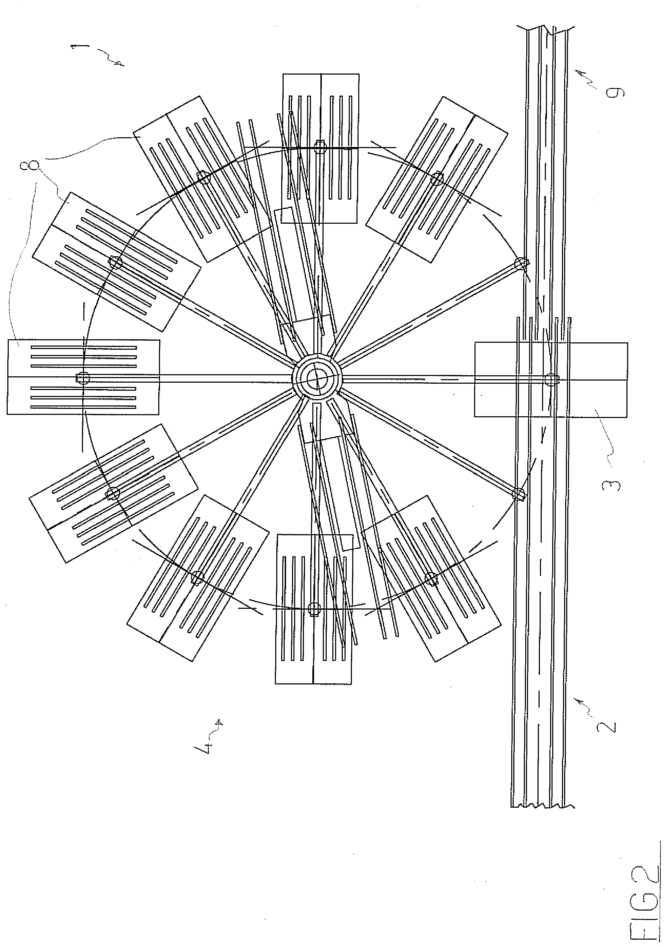

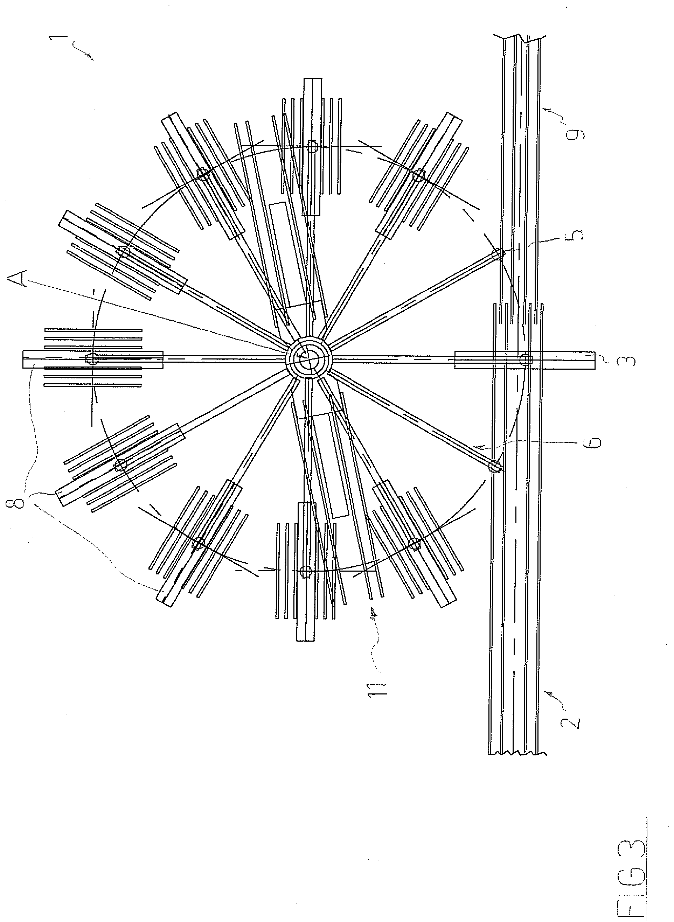

The system (1) can be advantageously used for large-dimension tiles (3): for example figure 1 illustrates stacks of tiles (8) having a format of 900mm x 900mm, figure 2 illustrates stacks of tiles (8) having a format of 600mm x 1200mm, figure 3 illustrates stacks of tiles (8) (also known as trims) having a format of 150mm x 1200mm, figure 4 illustrates stacks of tiles (8) having a format of 1200mm x 1200mm, figure 5 illustrates stacks of tiles (8) having a format of 1800mm x 900mm, figure 6 illustrates stacks of tiles (8) (also known as trims) having a format of 150mm x 1200mm.

The tiles (3) illustrated in figures 1-3 exhibit dimensions or an orientation such that each tile (3) can be gripped by gripping means (5) borne by one carousel arm (6) only. The tiles (3) illustrated in figures 4-6 exhibit dimensions or an orientation such that each tile (3) must preferably be gripped by a plurality of gripping means (5 borne by carousel arms (6) which are adjacent to one another, so as to guarantee a stable and secure grip of the tile (3).

In a comparison of figures 3 and 6, a different orientation of the tiles (3) (also known as trims, given that the length thereof is much greater than the width) travelling on the input line (2) can be observed, which can require the gripping of gripping means (5) borne by a sole carousel arm (6) (figure 3), or by gripping means (5) borne by a plurality of carousel arms (6) that are adjacent to one another (figure 6).

It is therefore advantageous, time by time, to regulate the relative position of adjacent carousel arms (6). This system (1) is therefore easily adaptable, with a simple regulating of the carousel arms (6), to tile (3) formats of any dimension, while maintaining a reasonable overall size of the system (1).

Figure 7 illustrates a possible embodiment of the sorting carousel (4). The sorting carousel (4) comprises a carousel shaft (15) which rotates with respect to the carousel axis (A) and which brings the plurality of carousel arms (6). Each carousel am (6) is vertically mobile along the carousel arm (15) by means of a looped belt (16) located along the carousel shaft (15). The gripping means (5) comprise suckers (18) connected to a depression source (not illustrated); the suckers (18) are arranged at the free ends of the carousel arms (6). The suckers (18) are therefore vertically mobile by effect of the movement of the carousel arms (6) which bear them; in this regard, figure 7 illustrates, in a broken line, the lowered position of two carousel arms (6). Elastic means (23) (illustrated in greater detail in figure 7A, which will be described in the following) are functionally interposed between each sucker (18) and the carousel arm (6).

As an alternative, the carousel arms (6) can be solidly constrained to the carousel shaft (15), and the gripping means (5) can comprise stems that are vertically mobile with respect to the carousel arms (6), which stems bear the suckers (18). In other words, each carousel arm (6) can bear, at the free end thereof, a stem (19) that is vertically mobile with respect to the carousel arm (6) and the stem (19) in turn can bear the gripping means (5). Figure 7A illustrates the coupling between a carousel arm (6) and a stem (19) that bears a sucker (18): the stem (19) slides along a vertical guide, not illustrated, solidly constrained to the carousel arm (6) and is provided with a rack (21) that develops vertically; instead, the carousel arm (6) rotatably bears a motorized cogged wheel (22) for moving the stem (19); elastic means (23) are functionally interposed between the sucker (18) and the stem (19).

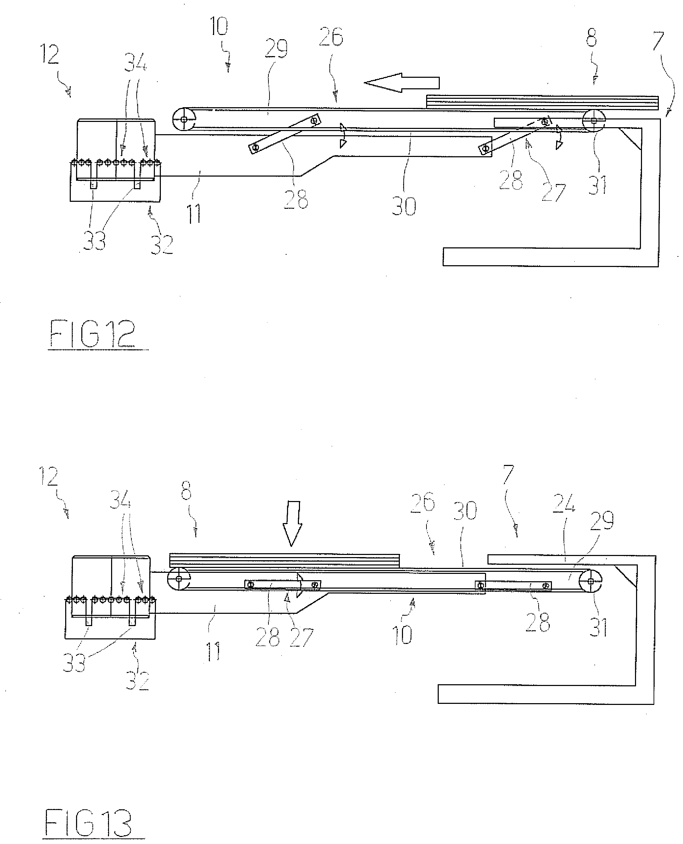

In a first embodiment illustrated in figures 7-15, the transfer arm (11) is arranged inferiorly with respect to the seatings (7); each seating (7) comprises two supports (24) for restingly receiving a stack of tiles (8), which supports (24) are spaced with respect to one another by an opening (25) which develops over a whole height of the seating (7). The loading means (10) comprise: a first loop conveyor (26) which is borne by the transfer arm (11) and which is dimensioned so as to vertically cross the opening (25) of each seating (7); an actuator (27) acting on the frame (29) of the first loop conveyor (26) so as to vertically move the first loop conveyor (26) between a disengaged position with a seating (7) (figure 13), in which the first loop conveyor (26) is arranged inferiorly of the seating (7) so as to allow rotation of the transfer arm (11), and an engaged position with a seating (7) (figure 12), wherein the first loop conveyor (26) is arranged in an opening (25) of a seating (7) and partially projects from the opening (25) and supports a stack of tiles (8).

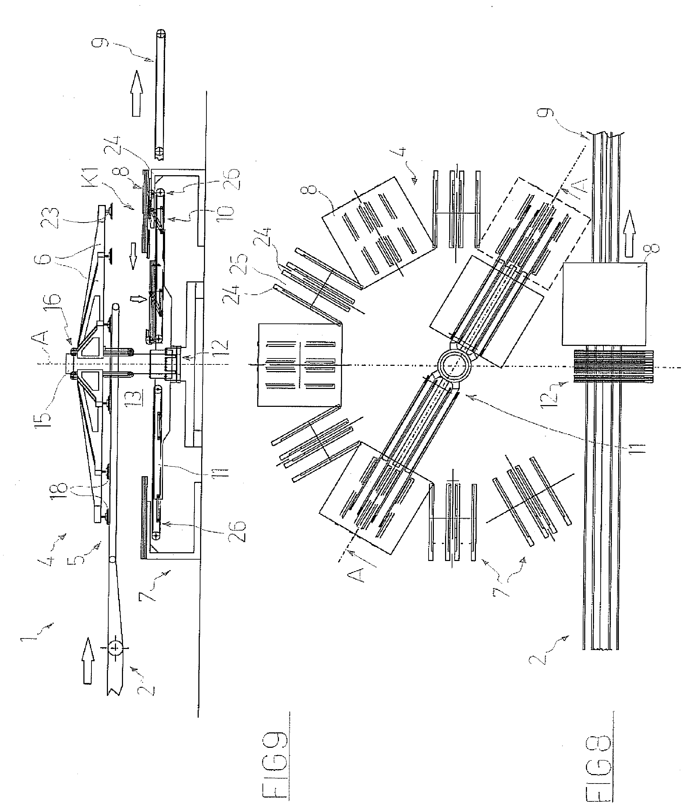

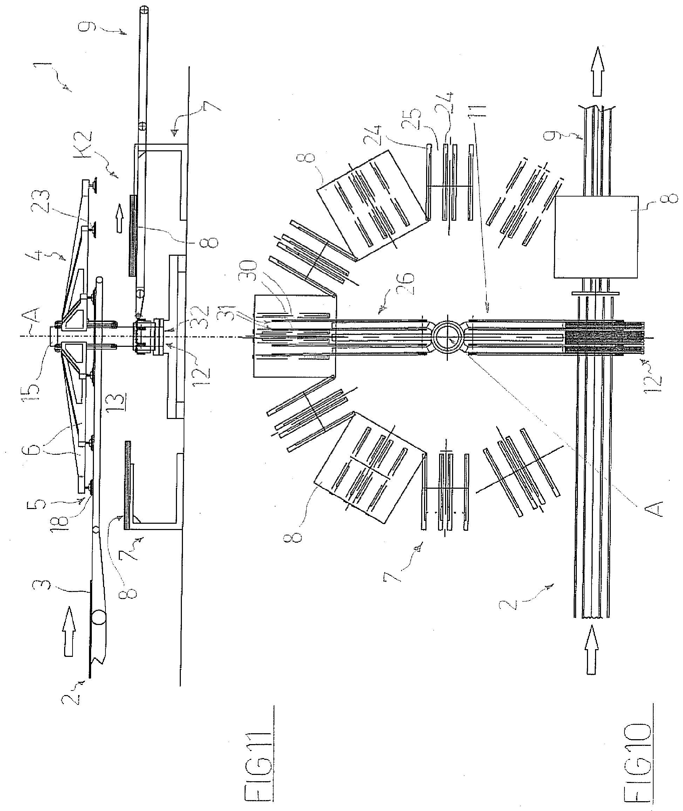

The seatings (7) can comprise racks (see figures 8, 10); in this case they will be provided with a plurality of openings (25).

In the illustrated example in the figures two first looped conveyors (26) are represented flanked to one another, each comprising two belts (30). In the following, however, reference will be made to one only first looped conveyor (26).

In order to vertically move the first loop conveyor (26) the actuator (27) can be a four-bar hinge (27) comprising a pair of parallel arms (28) having equal length, articulated to the transfer arm (11) and to the frame (29) of the first loop conveyor (26) and arranged in such a way that the first loop conveyor (26) maintains a horizontal trim during the raising and lowering thereof.

A loading step of a stack of tiles (8) on the first loop conveyor (26) can be done in the following way: with the first loop conveyor (26) in the disengaged position, the transfer arm (11) is arranged in a loading position in which it is radially aligned with respect to the seating (7) containing the stack of tiles (8) to be transferred, so that the first loop conveyor (26) is vertically aligned with the opening (25) of the seating (7); thereafter, the four-bar hinge (27) is activated to bring the first loop conveyor (26) into the engaged position (figure 12), which determines the collection of the stack of tiles (8) from the seating (7) on the first loop conveyor (26) due to the fact that the upper branch of the first loop conveyor (26) reaches a greater height than the seating (7) and thus raises the stack of tiles (8); at this point the first loop conveyor (26) is activated to move the stack of tiles (8) towards the carousel (A) axis, so that the stack of tiles (8) is brought into a position in which it is no longer superposed on the seating (7) (figure 13). Thus the length of the upper branch of the first loop conveyor (26) must be at least double the side of the stack of tiles (8) measured along the radial direction (see figure 13).

Thereafter, the transfer arm (11) is rotated so that it is brought into the unloading position, which in the illustrated example in the figures corresponds to a position of the transfer arm (11) which is perpendicular with respect to the output line (9).

The unloading means (12) of a stack of tiles (8) can include various characteristics of known type for transferring a stack of tiles (8) from a conveyor moving it along a first horizontal direction (a stack of tiles (8) activated by the first loop conveyor (26)) to a conveyor moving it along a second horizontal direction (stack of tiles (8) advancing on the output line (9)) which is perpendicular to the first horizontal direction.

The preferred solution illustrated in figures 7-14 is instead novel with respect to the prior art and will therefore be described in the following.

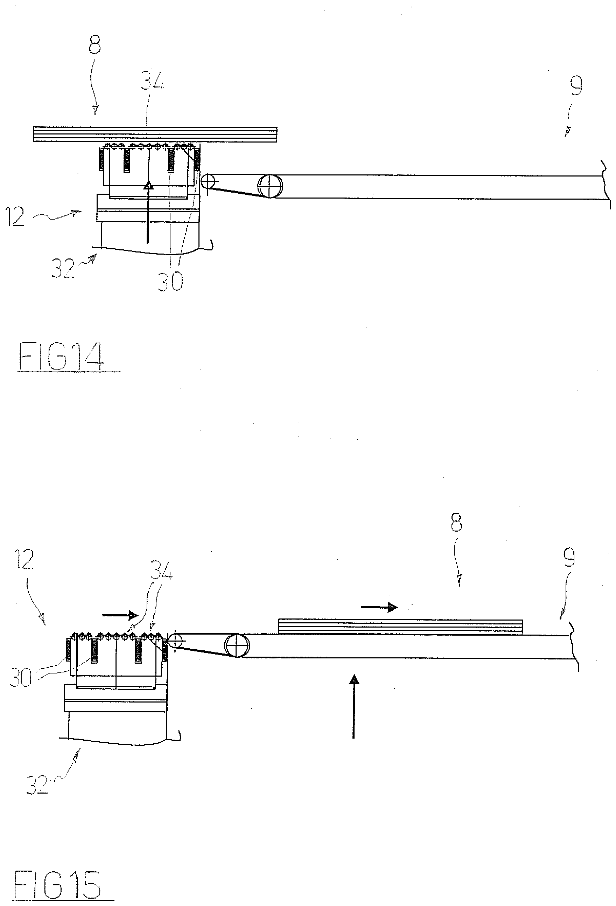

The first loop conveyor (26) is arranged projectingly with respect to the transfer arm (11) such that the driven pulleys (31) of the two belts (30) project with respect to the transfer arm (11). The unloading means (12) of a stack of tiles (8) can comprise: an exchange member (32) arranged by a side of the output line (9), which is vertically mobile between a lowered position (figures 12, 13) and a raised position (figures 14, 15) and is profiled with slots (33) (two slots (33) in the example illustrated in the figures) so as to form-couple with the projecting portions of the two more internal belts of the first loop conveyor (26) when the transfer arm (11) is perpendicularly positioned with respect to the output line (9) and the exchange member (32) is brought into the raised position (figures 14, 15); and a plurality of motorized rollers (34) which are arranged on the top of the exchange member (32), between the relative slots (33), and which have horizontal axes perpendicular to the axis of the output line (9). In this case the output line (9) is vertically mobile between a lowered position (figure 14) and a raised position (figure 15) so as not to obstruct the transfer (11) and the first loop conveyor (26).

When the transfer arm (11) displaces from the seating (7) (loading position) towards the output line (9) (unloading position in which the transfer arm (11) is perpendicular to the output line (9)), the output line (9) is brought into the lowered position (figure 14). Once the transfer arm (11) has reached the unloading position, the exchange member (32) is brought from the lowered position (figure 13) to the raised position (figure 14) which determines the coupling of the slots (33) of the exchange member (32) with the belts (30) of the first loop conveyor (26), up to determining the raising of the stack of tiles (8) which enters into contact with the plurality of rollers (34) (figure 14). At this point the output line (9) is brought into the raised position (figure 15) and the rollers (34) are activated to move the stack of tiles (8) on the output line (9).

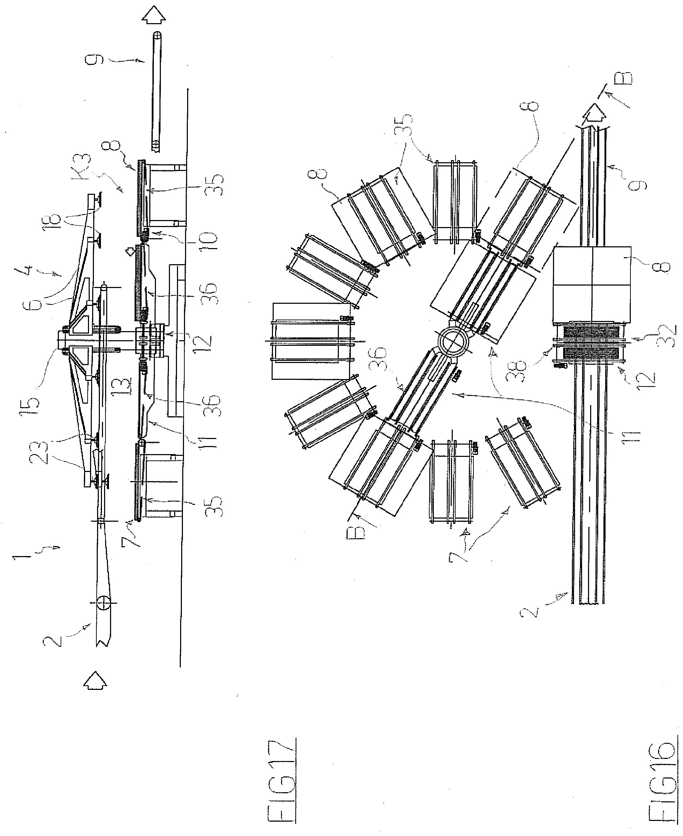

In a second embodiment, illustrated in figure 16-22, each seating (7) comprises a second loop conveyor (35) for restingly receiving a stack of tiles (8). The loading means (10) comprise a third loop conveyor (36). The second loop conveyor (35) and the third loop conveyor (36) are designed such that when the transfer arm (11) is in the loading position it is possible to move the stack of tiles (8) from the second loop conveyor (35) to the third loop conveyor (36). In particular, when the transfer arm (11) is in the loading position, the second loop conveyor (35) and the third loop conveyor (36) are radially aligned and the relative upper branches are horizontally aligned. In this case the length of the transfer arm (11) and the relative position of the second loop conveyor (35) on the transfer arm (11) are such as not to obstruct the output line (9) when the transfer arm (11) is brought towards the unloading position; therefore, the output line (9) must not comprise a vertical movement as in the first embodiment.

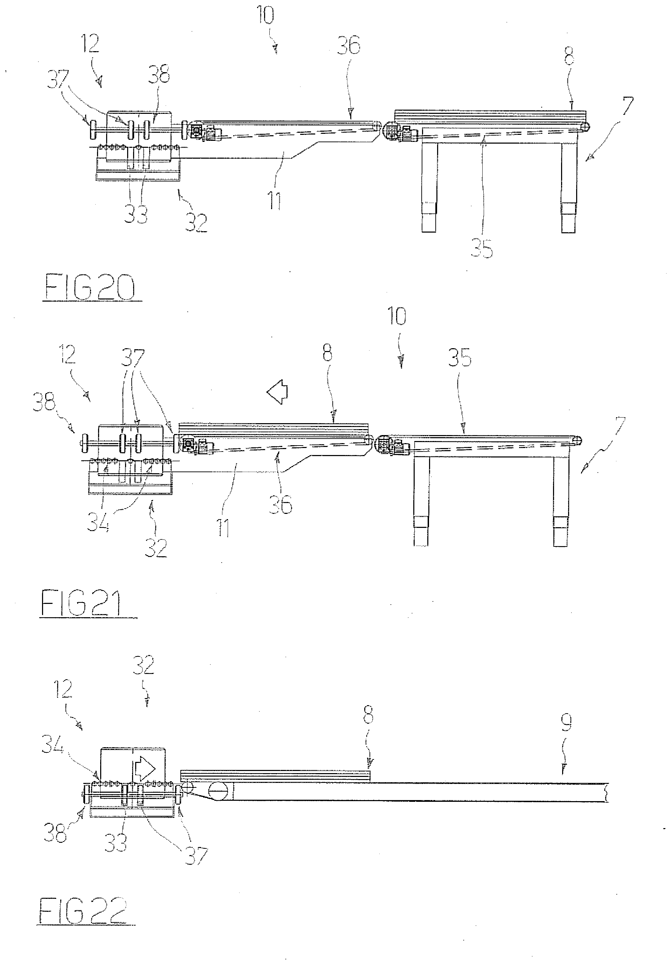

To load a stack of tiles (8) from a seating (7) on-board the transfer arm (11), the transfer arm (11) is brought into the loading position (figure 20) and the second loop conveyor (35) and the third loop conveyor (36) are activated (figure 21) so that the stack of tiles (8) transfers from the second loop conveyor (35) to the third loop conveyor (36).

The unloading means (12) comprise the exchange member (32) and the plurality of rollers (34) already previously discussed, and further a fourth loop conveyor (38) comprising, for example, four belts (37). The fourth loop conveyor (38) is arranged so as to be radially aligned to the third loop conveyor (36) when the transfer arm (11) is in the unloading position, and until the upper branch thereof is aligned horizontally with the upper branch of the third loop conveyor (36).

After the transfer arm (11) has reached the unloaded position, the third loop conveyor (36) and the fourth loop conveyor (38) are activated such as to transfer the stack of tiles (8) from the third loop conveyor (36) onto the fourth loop conveyor(38).

The belts (37) of the fourth loop conveyor (38) are arranged and dimensioned so as to form-couple with the slots (33) of the exchange member (32); once the transfer arm (11) has reached the unloading position, the exchange member (32) is brought from the lowered position (figures 20, 21) to the raised position (figure 22), which determines the coupling of the slots (33) of the exchange member (32) with the belts (37) of the fourth loop conveyor (38) up to determining the raising of the stack of tiles (8) which enters into contact with the plurality of rollers (34) (figure 22). At this point the rollers (34) are activated so as to move the stack of tiles (8) onto the output line (9).

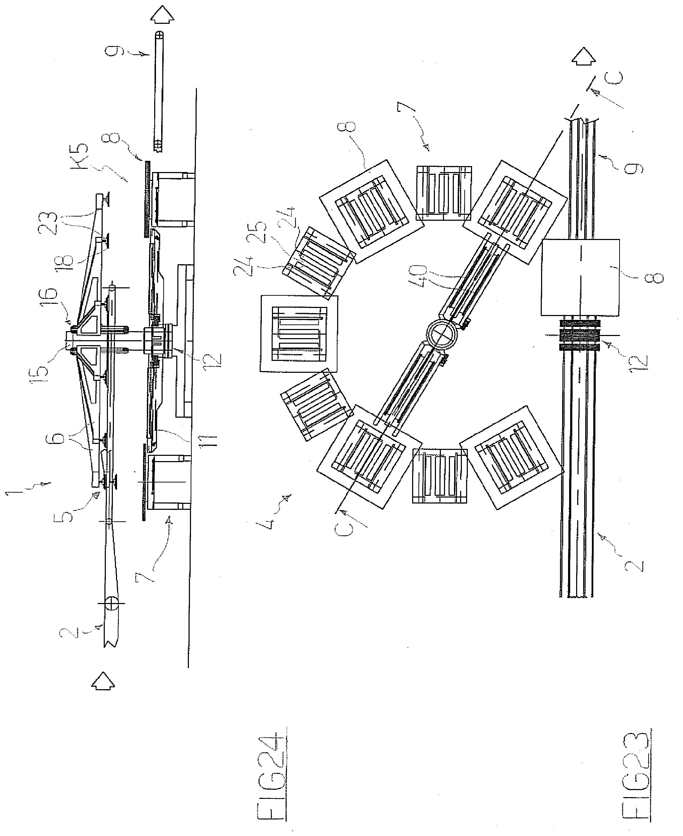

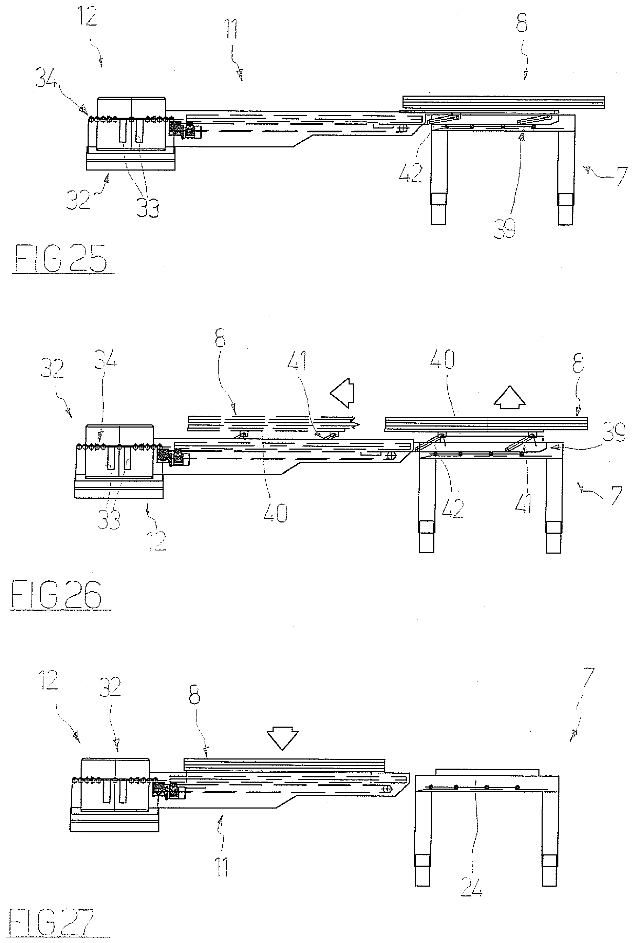

In a third embodiment, illustrated in figures 23-27, the transfer arm (11) is arranged inferiorly with respect to the seatings (7) and comprises a telescopic part (39) which is mobile in a radial direction between a retracted position (figures 23, 24 and 27) and an extended position in which a seating (7) is superposed on the telescopic part (39) when the transfer arm (11) is in the loading position; each seating (7) comprises two supports (24) for restingly receiving a stack of tiles (8), which supports (24) are distanced from one another by an opening (25) which develops over an entire height of the seating (7); the loading means (10) comprise a rest base (40) for supporting a stack of tiles (8), which rest base (40) is borne by the telescopic part (39), is dimensioned so as to vertically cross the opening (25) of each seating (7) and is vertically mobile between a disengaged position with a seating (7) (figure 25) and an engaged position with a seating (7) (figure 26) in which when the transfer arm (11) is in the loading position and the telescopic part (39) is in the extended position the rest base (40) projects from the opening (25) and supports a stack of tiles (8).

The seatings (7) can comprise racks (figure 23).

To vertically move the rest base (40) a four-bar hinge (41) can be included comprising a pair of parallel arms (42) of equal length, hinged to the telescopic part (39) and to the rest base (40) and arranged such that the rest base (40) maintains a horizontal trim during the raising and lowering thereof.

A loading step of a stack of tiles (8) on the rest base (40) can be carried out as follows: with the transfer arm (11) in the loading position, the telescopic part (39) in the extended position and the rest base (40) in the disengaged portion with a seating (7) (figure 25), the four-bar hinge (41) is activated to bring the rest base (40) into the engaged position with the seating (7), which determines the collection of the stack of tiles (8) from the seating (7) on the rest base (40) due to the fact that the upper surface of the rest base (40) contacting the stack of tiles (8) reaches a greater height with respect to the seating (7) and therefore raises the stack of tiles (8) (figure 26); the telescopic part (39) is then brought into the retracted position (figure 26) and the four-bar hinge (41) returns the rest base (40) into the disengaged position (figure 27); the transfer arm (11) is then brought into the unloading position and the telescopic part (39) is brought into the extended position so as to interact with the unloading means (12).

In the example illustrated in the figures the loading means (10) comprise two rest bases (40) arranged parallel to one another (figure 23); the telescopic part (39) can be formed by two arms extensible from the transfer arm (11).

The unloading means (12) are substantially equivalent to those described with reference to the first embodiment: in this case, however, the slots (33) are formed so as to form-couple with the arms of the telescopic part (39). Owing to the ability of the telescopic part (39) to move into the retracted position, it is no longer necessary to make the output line (9) vertically mobile.

In the examples illustrated with reference to the first embodiment, the second embodiment and the third embodiment, the transfer arms (11) are two in number, are solidly constrained to one another and are offset by a hundred and eighty degrees.

The foregoing has been described by way of non-limiting example, and any eventual constructional variants are understood to fall within the protective scope of the present technical solution, as claimed in the following.

## Claims

1. A tile sorting and stacking system, comprising:
an input line (2) supplying tiles (3) to be sorted and arranged in a row;
a sorting carousel (4) which rotates with respect to a carousel axis (A), which comprises a plurality of gripping means (5) and which comprises a plurality of carousel arms (6) which develop radially from the carousel axis (A) and which bear the plurality of gripping means (5), the sorting carousel (4) being arranged such as to receive the tiles (3) from the input line (2);
a plurality of seatings (7) arranged below the sorting carousel (4) along a section of a circumference which is coaxial to the carousel axis (A), which seatings (7) are conformed such as to restingly receive the tiles (3) released by the sorting carousel (4) and to form stacks of tiles (8);
an output line (9) which receives the stacks of tiles (8) accumulated in the seatings (7);
wherein:
the input line (2) is arranged radially or tangentially with respect to the section of circumference along which the seatings (7) are arranged;
the output line (9) is arranged radially or tangentially with respect to the section of circumference along which the seatings (7) are arranged;
**characterised in that** it comprises:
a transfer arm (11) which rotates with respect to a rotation axis substantially coinciding with the carousel axis (A), which transfer arm (11) is positionable angularly between a loading position, in which it is aligned radially to a seating (7) bearing a stack of tiles (8) to be loaded, and an unloading position in which it is arranged in proximity of the output line (9);
loading means (10) for loading a stack of tiles (8) from a seating (7) on-board the transfer arm (11) when the transfer arm (11) is arranged in the loading position;
unloading means (12) for unloading a stack of tiles (8) from the transfer arm (11) onto the output line (9) when the transfer arm (11) is arranged in the unloading position;
the transfer arm (11), the loading means (10) and the unloading means (12) being arranged and operating in a region of space (13) delimited superiorly by the carousel arms (6) and which region of space (13) is laterally delimited by the seatings (7), the input line (2) and the output line (9);
the gripping means (5) being vertically mobile so as to collect a tile (3) from the input line (2) and to release the tile onto a seating (7).

2. The tile (3) sorting and stacking system (1) of the preceding claim, wherein the input line is arranged tangentially with respect to the sorting carousel (4).

3. The tile (3) sorting and stacking system (1) of the preceding claim, wherein the output line (9) is arranged tangentially to the sorting carousel (4), parallel to the input line (2) and at a lower height than the input line (2).

4. The tile (3) sorting and stacking system (1) of any one of the preceding claims, wherein two or more adjacent carousel arms (6) are angularly adjustable nearingly or distancingly to one another in order to enable a gripping of a tile (3) from the input line (2) contemporaneously by more than one gripping means (5) borne by reciprocally-adjacent carousel arms (6), and wherein the seatings (7) are positioned and dimensioned such that more than one adjacent seatings (7) can contemporaneously support a stack of tiles (8) having dimensions such as to project from a seating (7).

5. The tile (3) sorting and stacking system (1) of any one of the preceding claims, wherein:
the transfer arm (11) is arranged inferiorly with respect to the seatings (7);
each seating (7) comprises two supports (24) for restingly receiving a stack of tiles (8), which supports (24) are spaced with respect to one another by an opening (25) which develops over a whole height of the seating (7);
the loading means (10) comprise: a first loop conveyor (26) which is borne by the transfer arm (11) and which is dimensioned so as to vertically cross the opening (25) of each seating (7); an actuator (27) acting on the frame (29) of the first loop conveyor (26) so as to vertically move the first loop conveyor (26) between a disengaged position with a seating (7), in which the first loop conveyor (26) is arranged inferiorly of the seating (7) so as to allow rotation of the transfer arm (11), and an engaged position with a seating (7), wherein the first loop conveyor (26) is arranged in an opening (25) of a seating (7) and partially projects from the opening (25) and supports a stack of tiles (8).

6. The tile (3) sorting and stacking system (1) of any one of the preceding claims from 1 to 4, wherein each seating (7) comprises a second loop conveyor (35) for restingly receiving a stack of tiles (8); and wherein the loading means (10) comprise a third loop conveyor (36); the second loop conveyor (35) and the third loop conveyor (36) being designed such that when the transfer arm (11) is in the loading position it is possible to move the stack of tiles (8) from the second loop conveyor (35) to the third loop conveyor (36).

7. The tile (3) sorting and stacking system (1) of any one of the preceding claims from 1 to 4, wherein:
the transfer arm (11) is arranged inferiorly with respect to the seatings (7) and comprises a telescopic part (39) which is mobile in a radial direction between a retracted position and an extended position in which a seating (7) is superposed on the telescopic part (39) when the transfer arm (11) is in the loading position;
each seating (7) comprises two supports (24) for restingly receiving a stack of tiles (8), which supports (24) are distanced from one another by an opening (25) which develops over an entire height of the seating (7);
the loading means (10) comprise a rest base (40) for supporting a stack of tiles (8), which rest base (40) is borne by the telescopic part (39), is dimensioned so as to vertically cross the opening (25) of each seating (7) and is vertically mobile between a disengaged position with a seating (7) and an engaged position with a seating (7) in which when the transfer arm (11) is in the loading position and the telescopic part (39) is in the extended position the rest base (40) projects from the opening (25) and supports a stack of tiles (8).

## Patentansprüche

1. System zum Sortieren und Stapeln von Fliesen, beinhaltend eine Einlauflinie (2) zum Zuführen von zu sortierenden und in einer Reihe angeordneten Fliesen (3);
ein Sortierkarussell (4), das sich um eine Karussellachse (A) dreht, das eine Vielzahl von Greifmitteln (5) beinhaltet und das eine Vielzahl von Karussellarmen (6) beinhaltet, die sich radial von der Karussellachse (A) aus erstrecken und die Vielzahl von Greifmitteln (5) tragen, wobei das Sortierkarussell (4) derart angeordnet ist, dass es die Fliesen (3) von der Einlauflinie (2) übernimmt;
eine Vielzahl von Aufnahmen (7), die unterhalb des Sortierkarussells (4) entlang eines zur Karussellachse (A) koaxialen Umfangsabschnitts angeordnet sind, wobei die Aufnahmen (7) dafür ausgelegt sind, die vom Sortierkarussell (4) ausgegebenen Fliesen (3) aufliegend aufzunehmen und Fliesenstapel (8) zu bilden;
eine Auslauflinie (9) zum Aufnehmen der in den Aufnahmen (7) angesammelten Fliesenstapel (8);
wobei:
die Einlauflinie (2) radial oder tangential zu dem Umfangsabschnitt angeordnet ist, entlang dessen die Aufnahmen (7) angeordnet sind;
die Auslauflinie (9) radial oder tangential zu dem Umfangsabschnitt angeordnet ist, entlang dessen die Aufnahmen (7) angeordnet sind;
**dadurch gekennzeichnet, dass** es Folgendes beinhaltet:
einen Übergabearm (11), der sich um eine Drehachse dreht, die im Wesentlichen mit der Karussellachse (A) übereinstimmt, wobei der Übergabearm (11) winklig positionierbar ist zwischen einer Ladeposition, in der er radial zu einer Aufnahme (7) angeordnet ist, die einen zu ladenden Fliesenstapel (8) trägt, und einer Entladeposition, in der er in der Nähe der Auslauflinie (9) angeordnet ist;
Lademittel (10) zum Laden eines Fliesenstapels (8) von einer Aufnahme (7) auf den Übergabearm (11), wenn der Übergabearm (11) in der Ladeposition angeordnet ist;
Entlademittel (12) zum Entladen eines Fliesenstapels (8) von dem Übergabearm (11) auf die Auslauflinie (9), wenn der Übergabearm (11) in der Entladeposition angeordnet ist;
wobei der Übergabearm (11), die Lademittel (10) und die Entlademittel (12) in einem Raumbereich (13) angeordnet sind und wirken, der nach oben durch die Karussellarme (6) begrenzt ist, und wobei der Raumbereich (13) seitlich durch die Aufnahmen (7), die Einlauflinie (2) und die Auslauflinie (9) begrenzt ist.
wobei die Greifmittel (5) vertikal beweglich sind, um eine Fliese (3) von der Einlauflinie (2) aufzunehmen und die Fliese auf eine Aufnahme (7) auszugeben.

2. System (1) zum Sortieren und Stapeln von Fliesen (3) nach dem vorhergehenden Anspruch, wobei die Einlauflinie tangential zu dem Sortierkarussell (4) angeordnet ist.

3. System (1) zum Sortieren und Stapeln von Fliesen (3) nach dem vorhergehenden Anspruch, wobei die Auslauflinie (9) tangential zu dem Sortierkarussell (4), parallel zu der Einlauflinie (2) und auf einer niedrigeren Höhe als die Einlauflinie (2) angeordnet ist.

4. System (1) zum Sortieren und Stapeln von Fliesen (3) nach einem der vorhergehenden Ansprüche, wobei zwei oder mehr benachbarte Karussellarme (6) winkelig sich einander annähernd oder sich voneinander entfernend einstellbar sind um das gleichzeitige Aufnehmen einer Fliese (3) von der Einlauflinie (2) durch mehr als eines der von benachbarten Karussellarmen (6) getragenen Greifmitteln (5) zu ermöglichen, und wobei die Aufnahmen (7) derart angeordnet und bemessen sind, dass mehr als eine der benachbarten Aufnahmen (7) gleichzeitig einen Fliesenstapel (8) tragen können, der solche Abmessungen aufweist, dass er aus einer Aufnahme (7) herausragt.

5. System (1) zum Sortieren und Stapeln von Fliesen (3) nach einem der vorhergehenden Ansprüche, wobei:
der Übergabearm (11) unterhalb von den Aufnahmen (7) angeordnet ist;
jede Aufnahme (7) zwei Stützen (24) zur aufliegenden Aufnahme eines Fliesenstapels (8) beinhaltet, wobei die Stützen (24) durch eine Öffnung (25) voneinander beabstandet sind, die sich über die gesamte Höhe der Aufnahme (7) erstreckt;
die Lademittel (10) beinhalten: einen ersten Umlaufförderer (26), der von dem Übergabearm (11) getragen wird und so bemessen ist, dass er die Öffnung (25) jeder Aufnahme (7) vertikal durchquert; einen Stellantrieb (27), der auf den Rahmen (29) des ersten Umlaufförderers (26) wirkt, um den ersten Umlaufförderer (26) vertikal zu bewegen zwischen einer Nichteingriffsstellung mit einer Aufnahme (7), in welcher der erste Umlaufförderer (26) unterhalb der Aufnahme (7) angeordnet ist, um die Drehung des Übergabearms (11) zu ermöglichen, und einer Eingriffsstellung mit einer Aufnahme (7), in welcher der erste Umlaufförderer (26) in einer Öffnung (25) einer Aufnahme (7) angeordnet ist und teilweise aus der Öffnung (25) hervorragt und einen Fliesenstapel (8) abstützt.

6. System (1) zum Sortieren und Stapeln von Fliesen (3) nach einem der vorhergehenden Ansprüche von 1 bis 4, wobei jede Aufnahme (7) einen zweiten Umlaufförderer (35) zur aufliegenden Aufnahme eines Fliesenstapels (8) beinhaltet; und wobei die Lademittel (10) einen dritten Umlaufförderer (36) beinhalten; wobei der zweite Umlaufförderer (35) und der dritte Umlaufförderer (36) dafür ausgelegt sind, dass es, wenn sich der Übergabearm (11) in der Ladeposition befindet, möglich ist, den Fliesenstapel (8) vom zweiten Umlaufförderer (35) auf den dritten Umlaufförderer (36) zu bewegen.

7. System (1) zum Sortieren und Stapeln von Fliesen (3) nach einem der vorhergehenden Ansprüche von 1 bis 4, wobei:
der Übergabearm (11) unterhalb von den Aufnahmen (7) angeordnet ist und einen teleskopischen Teil (39) beinhaltet, der in einer radialen Richtung beweglich ist zwischen einer zurückgezogenen Stellung und einer ausgefahrenen Stellung, in der eine Aufnahme (7) dem teleskopischen Teil (39) überlagert ist, wenn sich der Übergabearm (11) in der Ladeposition befindet;
jede Aufnahme (7) zwei Stützen (24) zur aufliegenden Aufnahme eines Fliesenstapels (8) beinhaltet, wobei die Stützen (24) durch eine Öffnung (25) voneinander beabstandet sind, welche sich über die gesamte Höhe der Aufnahme (7) erstreckt;
die Lademittel (10) eine Auflagebasis (40) zum Abstützen eines Fliesenstapels (8) beinhalten, wobei die Auflagebasis (40) von dem teleskopischen Teil (39) getragen wird, so bemessen ist, dass sie vertikal die Öffnung (25) jeder Aufnahme (7) durchquert, und vertikal beweglich ist zwischen einer Nichteingriffsstellung mit einer Aufnahme (7) und einer Eingriffsstellung mit einer Aufnahme (7), in der, wenn sich der Übergabearm (11) in der Ladeposition befindet und sich der teleskopische Teil (39) in der ausgefahrenen Stellung befindet, die Auflagebasis (40) von der Öffnung (25) hervorragt und einen Fliesenstapel (8) abstützt.

## Revendications

1. Un système de tri et d'empilement de carreaux, comprenant:
une ligne d'entrée (2) qui alimente des carreaux (3) à trier et disposés en file ;
un carrousel de triage (4) qui tourne par rapport à un axe de carrousel (A), qui comprend une pluralité de moyens de préhension (5) et qui comprend une pluralité de bras de carrousel (6) qui se développent radialement à partir de l'axe de carrousel (A) et qui portent la pluralité de moyens de préhension (5), le carrousel de triage (4) étant disposé de manière à recevoir les carreaux (3) depuis la ligne d'entrée (2) ;
une pluralité de logements (7) disposés en dessous du carrousel de triage (4) le long d'une section d'une circonférence qui est coaxiale à l'axe de carrousel (A), lesdits logements (7) sont conformés de manière à recevoir en appui les carreaux (3) relâchés par le carrousel de triage (4) et à former des piles de carreaux (8) ;
une ligne de sortie (9) qui reçoit les piles de carreaux (8) accumulées dans les logements (7) ;
dans lequel :
la ligne d'entrée (2) est disposée radialement ou tangentiellement par rapport à la section de circonférence le long de laquelle sont disposés lesdits logements (7) ;
la ligne de sortie (9) est disposée radialement ou tangentiellement par rapport à la section de circonférence le long de laquelle sont disposés les logements (7);
**caractérisé en ce qu'**il comprend :
un bras de transfert (11) qui tourne par rapport à un axe de rotation coïncidant essentiellement avec l'axe de carrousel (A), ledit bras de transfert (11) peut être positionné angulairement entre une position de chargement, dans laquelle il est aligné radialement par rapport à un logement (7) portant une pile de carreaux (8) à charger, et une position de déchargement dans laquelle il est disposé à proximité de la ligne de sortie (9) ;
des moyens de chargement (10) pour charger une pile de carreaux (8) d'un logement (7) à bord du bras de transfert (11) lorsque ce même bras de transfert (11) est disposé dans la position de chargement ;
des moyens de déchargement (12) pour décharger une pile de carreaux (8) du bras de transfert (11) sur la ligne de sortie (9) lorsque ce même bras de transfert (11) est disposé dans la position de déchargement ;
le bras de transfert (11), les moyens de chargement (10) et les moyens de déchargement (12) étant disposés et opérant dans une région d'espace (13) délimitée supérieurement par les bras de carrousel (6) et ladite région d'espace (13) est délimitée latéralement par les logements (7), la ligne d'entrée (2) et la ligne de sortie (9) ;
les moyens de préhension (5) étant mobiles verticalement de manière à prélever un carreau (3) de la ligne d'entrée (2) et à déposer le carreau sur un logement (7).

2. Le système (1) de tri et d'empilement de carreaux (3) selon la revendication précédente, dans lequel la ligne d'entrée est disposée tangentiellement par rapport au carrousel de triage (4) .

3. Le système (1) de tri et d'empilement de carreaux (3) selon la revendication précédente, dans lequel la ligne de sortie (9) est disposée tangentiellement au carrousel de triage (4), parallèlement à la ligne d'entrée (2) et à une hauteur inférieure par rapport à la ligne d'entrée (2) .

4. Le système (1) de tri et d'empilement de carreaux (3) selon l'une quelconque des revendications précédentes, dans lequel deux ou plus bras de carrousel (6) adjacents peuvent être réglés angulairement pour être rapprochés ou espacés l'un de l'autre de manière à permettre la prise d'un carreau (3) de la ligne d'entrée (2) par simultanément plusieurs moyens de préhension (5) portés par des bras de carrousel (6) réciproquement adjacents, et dans lequel les logements (7) sont positionnés et dimensionnés de manière à ce que plusieurs logements (7) adjacents puissent simultanément supporter une pile de carreaux (8) ayant des dimensions telles qu'elle dépasse d'un logement (7).

5. Le système (1) de tri et d'empilement de carreaux (3) selon l'une quelconque des revendications précédentes, dans lequel :
le bras de transfert (11) est disposé inférieurement par rapport aux logements (7) ;
chaque logement (7) comprend deux supports (24) pour recevoir en appui une pile de carreaux (8), lesdits supports (24) sont espacés les uns des autres par une ouverture (25) qui se développe sur toute la hauteur du logement (7) ;
les moyens de chargement (10) comprennent : un premier convoyeur à boucle (26) qui est porté par le bras de transfert (11) et qui est dimensionné de manière à traverser verticalement l'ouverture (25) de chaque logement (7) ; un actionneur (27) agissant sur le châssis (29) du premier convoyeur à boucle (26) de manière à déplacer verticalement ledit premier convoyeur à boucle (26) entre une position de dégagement par rapport à un logement (7), dans laquelle le premier convoyeur à boucle (26) est disposé inférieurement au logement (7) de manière à permettre la rotation du bras de transfert (11), et une position d'engagement avec un logement (7), dans laquelle le premier convoyeur à boucle (26) est disposé dans une ouverture (25) d'un logement (7) et dépasse partiellement de l'ouverture (25) et supporte une pile de carreaux (8) .

6. Le système (1) de tri et d'empilement de carreaux (3) selon l'une quelconque des revendications précédentes de 1 à 4, dans lequel chaque logement (7) comprend un deuxième convoyeur à boucle (35) pour recevoir en appui une pile de carreaux (8) ; et dans lequel les moyens de chargement (10) comprennent un troisième convoyeur à boucle (36) ; le deuxième convoyeur à boucle (35) et le troisième convoyeur à boucle (36) étant conçus de manière à ce que, lorsque le bras de transfert (11) est dans la position de chargement, il soit possible de déplacer la pile de carreaux (8) du deuxième convoyeur à boucle (35) au troisième convoyeur à boucle (36).

7. Le système (1) de tri et d'empilement de carreaux (3) selon l'une quelconque des revendications précédentes de 1 à 4, dans lequel :
le bras de transfert (11) est disposé inférieurement par rapport aux logements (7) et comprend une partie télescopique (39) qui est mobile dans une direction radiale entre une position rétractée et une position étendue dans laquelle un logement (7) est superposé sur la partie télescopique (39) lorsque le bras de transfert (11) est dans la position de chargement ;
chaque logement (7) comprend deux supports (24) pour recevoir en appui une pile de carreaux (8), lesdits supports (24) sont espacés les uns des autres par une ouverture (25) qui se développe sur toute la hauteur du logement (7) ;
les moyens de chargement (10) comprennent une base d'appui (40) pour supporter une pile de carreaux (8), ladite base d'appui (40) est portée par la partie télescopique (39), est dimensionnée de manière à traverser verticalement l'ouverture (25) de chaque logement (7) et est mobile verticalement entre une position de dégagement par rapport à un logement (7) et une position d'engagement avec un logement (7) dans laquelle, lorsque le bras de transfert (11) est dans la position de chargement et la partie télescopique (39) est dans la position étendue, la base d'appui (40) dépasse de l'ouverture (25) et supporte une pile de carreaux (8) .
